# EUROPÄISCHE PATENTSCHRIFT

(11) **EP 2 877 722 B1**
(45) Veröffentlichungstag und Bekanntmachung des Hinweises auf die Patenterteilung: **22.03.2017**
(21) Anmeldenummer: 13739706.3
(22) Anmeldetag: 22.07.2013
(51) Int. Cl.: F02B 29/04, F02M 35/024, F02M 35/04

(54) **BRENNKRAFTMASCHINE MIT FRISCHLUFTVERSORGUNGSEINRICHTUNG**
INTERNAL COMBUSTION ENGINE COMPRISING A FRESH AIR SUPPLY DEVICE
MOTEUR À COMBUSTION INTERNE COMPRENANT UN DISPOSITIF D'APPORT D'AIR FRAIS

(30) Priorität: 26.07.2012 DE 102012213165
(43) Veröffentlichungstag der Anmeldung: 03.06.2015
(73) Patentinhaber: Mahle International GmbH, 70376 Stuttgart (DE); MAHLE Behr GmbH & Co. KG, 70469 Stuttgart (DE)
(72) Erfinder: BAUER, Swen-Juri, 70374 Stuttgart (DE); EILEMANN, Andreas, 71729 Erdmannhausen (DE); GRÜNER, Andreas, 73110 Hattenhofen (DE); RICHTER, Jens, 71723 Großbottwar (DE); RISTOVSKI, Robert, 73614 Schorndorf (DE); SPRINGMANN, Katrin, 72172 Hopfau (DE)
(74) Vertreter: BRP Renaud & Partner mbB Rechtsanwälte Patentanwälte Steuerberater
(86) Internationale Anmeldenummer: PCT/EP2013/065429
(87) Internationale Veröffentlichungsnummer: WO 2014/016255

(56) Entgegenhaltungen:
- EP-A2- 1 998 022
- DE-A1- 19 604 738
- DE-C1- 19 756 985
- FR-A1- 2 645 209
- US-A1- 2006 272 621

## Beschreibung

Die vorliegende Erfindung betrifft eine Frischluftversorgungseinrichtung für eine Brennkraftmaschine, insbesondere eines Kraftfahrzeugs, mit den Merkmalen des Oberbegriffs des Anspruchs 1. Die Erfindung betrifft außerdem eine mit einer derartigen Frischluftversorgungseinrichtung ausgestattete Brennkraftmaschine.

Üblicherweise umfasst eine Frischluftversorgungseinrichtung, mit deren Hilfe Brennräume einer Brennkraftmaschine mit Frischluft versorgt werden, ein Filterelement, um die aus der Umgebung angesaugte Luft zu reinigen. Bei aufgeladenen Brennkraftmaschinen umfasst die Frischluftversorgungseinrichtung außerdem einen Ladeluftkühler, um die aufgeladene Frischluft vor dem Eintritt in die Brennräume zu kühlen.

Bei der Motorisierung von Fahrzeugen besteht ein Trend dahingehend, vermehrt auch kleinere Brennkraftmaschinen aufzuladen. Da kleinere Fahrzeuge in der Regel auch einen vergleichsweise kleinen Motorraum aufweisen, besteht ein Bedarf für möglichst klein und kompakt bauende, leistungsstarke Frischluftversorgungseinrichtungen.

Eine gattungsgemäße Frischluftversorgungseinrichtung ist aus der FR 2 645 209 A1 bekannt. Sie umfasst ein Filterelement, einen Ladeluftkühler, der einen Kühlmittelpfad mit einem Ladeluftpfad wärmeübertragend koppelt, einen Frischlufteinlass für Frischluft, einen Auslassstutzen für gefilterte Frischluft zur fluidischen Kopplung mit einem Frischlufteintritt eines Verdichters eines Abgasturboladers, einen Einlassstutzen für Ladeluft zur fluidischen Kopplung mit einem Ladeluftaustritt des Verdichters, einen Ladeluftauslass für gekühlte Ladeluft, einen Kühlmitteleinlass für ein flüssiges Kühlmittel, und einen Kühlmittelauslass für das Kühlmittel, wobei ein Frischluftpfad den Frischlufteinlass mit dem Auslassstutzen verbindet und durch das Filterelement hindurchführt, wobei der Ladeluftpfad den Einlassstutzen mit dem Ladeluftauslass verbindet und durch den Ladeluftkühler hindurchführt, wobei der Kühlmittelpfad den Kühlmitteleinlass mit dem Kühlmittelauslass verbindet und durch den Ladeluftkühler hindurchführt.

Weitere Frischluftversorgungseinrichtungen sind aus der DE 197 56 985 C1 und der EP 1 998 022 A2 bekannt.

Die vorliegende Erfindung beschäftigt sich mit dem Problem, für eine aufgeladene Brennkraftmaschine bzw. für eine Frischluftversorgungseinrichtung eine verbesserte Ausführungsform anzugeben, die sich insbesondere durch eine kompakte Bauweise auszeichnet. Gleichzeitig ist eine preiswerte Realisierbarkeit angestrebt.

Erfindungsgemäß wird dieses Problem durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, der Ladeluft die unerwünschte Wärme mit Hilfe eines mit einem flüssigen Kühlmittel betriebenen Kühlkreises entziehen zu können, wozu die Frischluftversorgungseinrichtung das Filterelement, den Ladeluftkühler und die zugehörigen Anschlüsse bzw. Schnittstellen umfasst. Hierdurch lässt sich eine besonders kompakte Baugruppe mit hoher Funktionsdichte schaffen, die auch bei engen Motorräumen verwendet werden kann.

Eine erfindungsgemäße aufgeladene Brennkraftmaschine umfasst dabei einen Verdichter eines Abgasturboladers sowie eine erfindungsgemäße Frischluftversorgungseinrichtung. Im Einzelnen umfasst die erfindungsgemäße Frischluftversorgungseinrichtung einen Frischlufteinlass für Frischluft aus einer Umgebung der Brennkraftmaschine bzw. des Fahrzeugs, einen Auslassstutzen für gefilterte Frischluft, einen Einlassstutzen für Ladeluft, also für aufgeladene Frischluft, einen Ladeluftauslass für gekühlte Ladeluft, einen Kühlmitteleinlass für flüssiges Kühlmittel und einen Kühlmittelauslass für das flüssige Kühlmittel. Ferner sind in der Frischluftversorgungseinrichtung ein Frischluftpfad, ein Ladeluftpfad und ein Kühlmittelpfad ausgebildet, wobei im Ladeluftkühler der Kühlmittelpfad mit dem Ladeluftpfad wärmeübertragend gekoppelt ist. Der Frischluftpfad verbindet den Frischlufteinlass mit dem Auslassstutzen fluidisch und ist durch das Filterelement hindurchgeführt. Der Ladeluftpfad verbindet den Einlassstutzen mit dem Ladeluftauslass fluidisch und ist durch den Ladeluftkühler hindurchgeführt. Der Kühlmittelpfad verbindet den Kühlmitteleinlass mit dem Kühlmittelauslass fluidisch und ist ebenfalls durch den Ladeluftkühler hindurchgeführt. Der Verdichter weist dabei einen Frischlufteintritt, der fluidisch mit dem Auslassstutzen verbunden ist, und einen Ladeluftaustritt auf, der fluidisch mit dem Einlassstutzen verbunden ist.

Entsprechend einer ersten grundlegenden erfindungsgemäßen Ausführungsform ist für das Filterelement und für den Ladeluftkühler ein gemeinsames Gehäuse vorgesehen, das einen Filterraum zur Aufnahme des Filterelements und einen dazu separaten, also davon insbesondere fluidisch getrennten Kühlerraum zur Aufnahme des Ladeluftkühlers aufweist. Durch die Unterbringung des mit einem flüssigen Kühlmedium arbeitenden Ladeluftkühlers und des Filterelements in demselben Gehäuse ergibt sich eine besondere kompakte Bauform für die Frischluftversorgungseinrichtung.

Gemäß einer vorteilhaften Weiterbildung können der Kühlmitteleinlass und der Kühlmittelauslass am Gehäuse ausgebildet sein und in den Kühlerraum einmünden, durch den der Ladeluftpfad und der Kühlmittelpfad hindurchgeführt sind. Das Gehäuse definiert auf diese Weise zum einen eine Gasführung zur Begrenzung des Ladeluftpfads und zum anderen eine Flüssigkeitsführung zur Begrenzung des Kühlmittelpfads. Hierdurch erhält das Gehäuse eine zusätzliche Funktionalität, nämlich die Führung des flüssigen Kühlmittels, wodurch sich der Aufbau des Ladeluftkühlers erheblich vereinfacht.

Bei einer anderen Weiterbildung kann der in den Kühlerraum eingesetzte Ladeluftkühler im Kühlerraum den Ladeluftpfad und den Kühlmittelpfad fluidisch voneinander trennen und wärmeübertragend miteinander koppeln. Mit anderen Worten, während bei fehlendem Ladeluftkühler der Ladeluftpfad und der Kühlmittelpfad im Kühlerraum offen miteinander verbunden sind, führt erst der Einbau des Ladeluftkühlers in den Kühlerraum zur erforderlichen fluidischen Trennung zwischen der gasförmigen Ladeluft und dem flüssigen Kühlmittel. Somit wirken der Ladeluftkühler und das Gehäuse zur Ausbildung des Kühlmittelpfads und zur fluidischen Trennung des Kühlmittelpfads vom Ladeluftpfad zusammen.

Gemäß einer anderen vorteilhaften Weiterbildung kann nun der Ladeluftkühler wenigstens eine Dichtung aufweisen, die den Ladeluftpfad gegenüber dem Kühlmittelpfad dichtet. Beispielsweise kann der Ladeluftkühler zwei derartige Dichtungen aufweisen, nämlich eine erste Dichtung, die an einer Ladelufteinlassseite des Ladeluftkühlers angeordnet ist und den Ladeluftkühler in der Umfangsrichtung geschlossen umgibt, und eine zweite Dichtung, die an einer Ladeluftauslassseite des Ladeluftkühlers angeordnet ist und diesen dort in der Umfangsrichtung geschlossen umgibt. Optional kann das Gehäuse im Kühlerraum komplementär zu den Dichtungen positionierte und ausgestaltete Aufnahmenuten aufweisen, in welche die vom Ladeluftkühler abstehenden Dichtungen eingreifen können. Die Dichtungen und die Aufnahmenuten wirken dabei nach Art einer Nut-Feder-Verbindung zusammen und können bei der Montage des Ladeluftkühlers als Führung dienen und können im eingebauten Zustand zur Positionierung bzw. Fixierung des Ladeluftkühlers im Gehäuse dienen oder zumindest beitragen.

Entsprechend einer anderen vorteilhaften Ausführungsform kann das Gehäuse einen Basiskörper aufweisen, der den Filterraum und einen Teil des Kühlerraums aufweist. Ferner kann dieser Basiskörper optional den Frischlufteinlass, den Auslassstutzen und den Ladeluftauslass aufweisen. Darüber hinaus umfasst das Gehäuse einen Abdeckkörper, der an den Basiskörper angebaut ist und der einen Teil des Kühlerraums aufweist. Optional kann der Abdeckkörper außerdem den Einlassstutzen aufweisen. Durch Anbauen des Abdeckkörpers an den Basiskörper komplettiert der am Abdeckkörper vorgesehene Teil des Kühlerraums den am Basiskörper vorgesehenen Teil des Kühlerraums zum gesamten Kühlerraum. Grundsätzlich kann eine beliebige Aufteilung des Kühlerraums auf den Basiskörper und auf den Abdeckkörper vorgesehen sein. Bei einer bevorzugten Ausführungsform umfassen der Basiskörper und der Abdeckkörper jeweils etwa eine Hälfte des Kühlerraums.

Bei einer anderen Weiterbildung kann der Anbaukörper an den Basiskörper angeschweißt sein. Eine derartige Schweißverbindung lässt sich insbesondere dann besonders preiswert realisieren, wenn die Gehäusekörper jeweils aus Kunststoff hergestellt sind. Geeignete Schweißverfahren sind beispielsweise Reibschweißen, Laserschweißen, Infrarotschweißen und Heißgasschweißen.

Bei einer zweiten grundlegenden, jedoch nicht erfindungsgemäßen Ausführungsform können ein Filtergehäuse, ein Kühlergehäuse, ein Einlassgehäuse und ein Auslassgehäuse vorgesehen sein, die zur Realisierung der Frischluftversorgungseinrichtung aneinander angebaut sind. Das Filtergehäuse enthält einen Filterraum zur Aufnahme des Filterelements und weist den Frischlufteinlass sowie den Auslassstutzen auf. Das Kühlergehäuse umschließt in der Umfangsrichtung geschlossen den Ladeluftkühler von der Ladelufteinlassseite bis zur Ladeluftauslassseite. Ferner weist das Kühlergehäuse den Kühlmitteleinlass und den Kühlmittelauslass auf. Durch diese Bauform ist der Kühlmittelpfad in den Ladeluftkühler vollständig integriert, so dass der Kühlmittelpfad durch das Kühlergehäuse hindurchführt. Hierdurch vereinfacht sich die Gestaltung der übrigen Komponenten des Ladeluftkühlers. Das Einlassgehäuse ist im zusammengebauten Zustand an die Ladelufteinlassseite des Ladeluftkühlers angeschlossen und weist den Einlassstutzen auf. Das Auslassgehäuse ist an die Ladeluftauslassseite des Ladeluftkühlers angeschlossen und weist den Ladeluftauslass auf. Durch diese Bauweise lässt sich ebenfalls ein besonders kompakter Aufbau für die Frischluftversorgungseinrichtung realisieren, wobei der Ladeluftkühler mit Kühlergehäuse und integriertem Kühlmittelpfad eine vollständig vormontierbare Einheit bildet, die besonders einfach an die übrigen, vorzugsweise aus Kunststoff hergestellten Gehäuse der Frischluftversorgungseinrichtung angebaut werden kann.

Gemäß einer vorteilhaften Weiterbildung können das Filtergehäuse, das Einlassgehäuse und das Auslassgehäuse aus Kunststoff hergestellt sein, während das Kühlergehäuse aus einem Metall oder aus einer Metalllegierung hergestellt ist. Durch diese Bauweise lassen sich die einzelnen Komponenten besonders preiswert realisieren.

Gemäß einer anderen Weiterbildung kann das Kühlergehäuse an der Ladelufteinlassseite mit dem Einlassgehäuse vercrimpt sein. Zusätzlich oder alternativ kann das Kühlergehäuse an der Ladeluftauslassseite mit dem Auslassgehäuse vercrimpt sein. Bei einer Crimpverbindung werden metallische Verbindungsabschnitte des Kühlergehäuses um Kunststoff-Verbindungsabschnitte des Einlassgehäuses bzw. des Auslassgehäuses herum plastisch verformt, insbesondere darin eingedrückt, wodurch sich eine formschlüssige Verbindung zwischen Metallbauteil und Kunststoffbauteil ergibt.

Bei einer anderen Weiterbildung kann das Einlassgehäuse mit dem Filtergehäuse verclipst sein. Zusätzlich oder alternativ kann das Auslassgehäuse mit dem Filtergehäuse verclipst sein. Das Kühlergehäuse bildet zusammen mit dem daran angebauten Einlassgehäuse und dem daran angebauten Auslassgehäuse eine Gehäusebaugruppe, die über die Clipsverbindungen von Einlassgehäuse und Auslassgehäuse an das Filtergehäuse angebaut werden kann.

Entsprechend einer besonders vorteilhaften Ausführungsform des Ladeluftkühlers, die sowohl bei der ersten grundlegenden erfindungsgemäßen Ausführungsform der Frischluftversorgungseinrichtung als auch bei der zweiten grundlegenden nicht erfindungsgemäßen Ausführungsform der Frischluftversorgungseinrichtung, jeweils einschließlich der zugehörigen Weiterbildungen, realisierbar ist, kann der Ladeluftkühler mehrere Rohre, vorzugsweise Flachrohre, aufweisen, die einenends an einer Ladelufteinlassseite des Ladeluftkühlers offen sind und die anderenends an einer Ladeluftauslassseite des Ladeluftkühlers offen sind, wobei der Ladeluftpfad durch diese Rohre hindurchführt. Hierdurch ergibt sich ein besonders preiswerter Aufbau für den Ladeluftkühler.

Gemäß einer zweckmäßigen Weiterbildung können die Rohre voneinander beabstandet sein, so dass zwischen benachbarten Rohren jeweils ein Zwischenraum ausgebildet ist, durch den der Kühlmittelpfad hindurchführt. Ein derartiger Aufbau lässt sich vergleichsweise preiswert realisieren.

Zur Verbesserung der Wärmeübertragung kann in die Rohre jeweils eine Wärmeübertragungsstruktur, beispielsweise in Form von Lamellen und/oder Turbulatoren, eingesetzt sein.

Bei einer anderen Weiterbildung können die Zwischenräume in einem an die Ladelufteinlassseite des Ladeluftkühlers anschließenden ersten Endbereich und in einem an die Ladeluftauslassseite des Ladeluftkühlers anschließenden zweiten Endbereich einen kleineren Durchströmungswiderstand aufweisen als in einem zwischen den Endbereichen angeordneten Mittelbereich. Durch diese Bauform wird eine bevorzugte Durchströmung der Zwischenräume im ersten Endbereich und im zweiten Endbereich realisiert, wodurch es möglich ist, im Kühlmittelpfad beispielsweise eine Verteilerkammer, eine Sammelkammer und eine Umlenkkammer zu realisieren. Die Verteilerkammer kommuniziert mit dem Kühlmitteleinlass und mit einem der Endbereiche. Die Sammelkammer dagegen kommuniziert mit dem Kühlmittelauslass und mit dem anderen der Endbereiche. Sammelkammer und Verteilerkammer sind nebeneinander auf derselben Seite des Ladeluftkühlers angeordnet. Die Umlenkkammer ist dagegen der Verteilerkammer und der Sammelkammer gegenüberliegend angeordnet und kommuniziert mit beiden Endbereichen. Der Kühlmittelpfad führt somit vom Kühlmitteleinlass durch die Verteilerkammer durch den einen Endbereich in die Umlenkkammer und von der Umlenkkammer durch den anderen Endbereich durch die Sammelkammer und von dieser zum Kühlmittelauslass. Des Weiteren führt der Kühlmittelpfad auch durch den Mittelbereich jedoch mit reduzierter Strömungsgeschwindigkeit.

Bei einer anderen vorteilhaften Weiterbildung kann vorgesehen sei, dass nur im Mittelbereich Wärmeübertragungsstrukturen, wie zum Beispiel Lamellen und/oder Turbulatoren, in den Zwischenräumen angeordnet sind. Mit Hilfe dieser Wärmeübertragungsstrukturen kann der Strömungswiderstand im Mittelbereich gegenüber den Endbereichen erhöht werden, um die gewünschte gezielte Durchströmung der Zwischenräume zu realisieren.

Bei einem Ladeluftkühler, der bevorzugt nach dem Gegenstromprinzip arbeitet, ist der erste Endbereich bevorzugt dem Kühlmittelauslass zugeordnet, während dann der zweite Endbereich bevorzugt dem Kühlmitteleinlass zugeordnet ist.

Bei einer anderen vorteilhaften Ausführungsform kann vorgesehen sein, dass an der Ladelufteinlassseite eine (erste) Endplatte vorgesehen ist, die für jedes Rohr eine separate Durchgangsöffnung aufweist und die den Ladeluftpfad vom Kühlmittelpfad trennt. Analog dazu kann an der Ladeluftauslassseite eine (zweite) Endplatte vorgesehen sein, die für jedes Rohr eine separate Durchgangsöffnung aufweist und die den Kühlmittelpfad vom Ladeluftpfad trennt. Mit Hilfe derartiger Endplatten lässt sich der Ladeluftkühler besonders einfach realisieren.

Die erfindungsgemäße Frischluftversorgungseinrichtung umfasst somit ein Filterelement, einen Ladeluftkühler, der einen Kühlmittelpfad mit einem Ladeluftpfad wärmeübertragend koppelt, eine Frischlufteinlass für Frischluft, einem Auslassstutzen für gefilterte Frischluft zur fluidischen Kopplung mit einem Frischlufteintritt eines Verdichters eines Abgasturboladers, einen Einlassstutzen für Ladeluft zur fluidischen Kopplung mit einem Ladeluftaustritt des Verdichters, einen Ladeluftauslass für gekühlte Ladeluft, einen Kühlmitteleinlass für ein flüssiges Kühlmittel, und einen Kühlmittelauslass für das Kühlmittel, wobei ein Frischluftpfad den Frischlufteinlass mit dem Auslassstutzen verbindet und durch das Filterelement hindurchführt, wobei der Ladeluftpfad den Einlassstutzen mit dem Ladeluftauslass verbindet und durch den Ladeluftkühler hindurchführt, und wobei der Kühlmittelpfad den Kühlmitteleinlass mit dem Kühlmittelauslass verbindet und durch den Ladeluftkühler hindurchführt.

Eine bevorzugte Ausführungsform ist gekennzeichnet durch einen Verdichter eines Abgasturboladers, wobei der Verdichter eintrittsseitig mit dem Auslassstutzen und austrittsseitig mit dem Einlassstutzen fluidisch verbunden ist. Hierdurch erhält die Frischluftversorgungseinrichtung einen erhöhten Integrationsgrad, was den Zusammenbau der Brennkraftmaschine vereinfacht.

Insbesondere kann dabei vorgesehen sein, dass die Frischluftversorgungseinrichtung mit oder ohne Verdichter eine separat von der jeweiligen Brennkraftmaschine vormontierbare Einheit ist, die im vormontierten Zustand an die jeweilige Brennkraftmaschine anbaubar ist. Hierdurch wird die Montage der Brennkraftmaschine erheblich vereinfacht.

Besonders zweckmäßig ist eine Ausführungsform, bei der eine erste Montagerichtung zum Verbinden des Auslassstutzens mit dem Frischlufteintritt des Verdichters parallel zu einer zweiten Montagerichtung zum Verbinden des Einlassstutzens mit dem Ladeluftaustritt des Verdichters verläuft. Hierdurch lässt sich der Verdichter besonders einfach an die übrige Frischluftversorgungseinrichtung ansetzten. Bei an der Brennkraftmaschine vormontiertem Verdichter lässt sich die Frischluftversorgungseinrichtung einfach an die Brennkraftmaschine ansetzen.

Gemäß einer bevorzugten Weiterbildung kann dabei vorgesehen sein, dass der Auslasstutzen räumlich so ausgerichtet ist, dass eine erste Hauptströmungsrichtung der Frischluft im Bereich eines Austrittsendes des Auslassstutzens parallel zur zugehörigen ersten Montagerichtung verläuft, während der Einlassstutzen räumlich so ausgerichtet ist, dass eine zweite Hauptströmungsrichtung der Ladeluft im Bereich eines Eintrittsendes des Einlassstutzens parallel zur zugehörigen zweiten Montagerichtung verläuft.

Besonders vorteilhaft ist eine Weiterbildung, bei der das Austrittsende des Auslassstutzens in einer ersten Ebene liegt, die sich senkrecht zur ersten Montagerichtung erstreckt, während das Eintrittsende des Einlassstutzens in einer zweiten Ebene liegt, die sich senkrecht zur zweiten Montagerichtung erstreckt.

Bei einer anderen Ausführungsform kann vorgesehen sein, dass der Ladeluftauslass zum Verbinden mit einem Eintritt eines Ladeluftverteilers eine Montagerichtung besitzt, die parallel zu den Montagerichtungen des Auslassstutzens und des Einlassstutzens verläuft. Auch kann vorgesehen sein, dass im Bereich des Ladeluftauslasses eine Hauptströmungsrichtung vorliegt, die parallel zu der zugehörigen Montagerichtung orientiert ist.

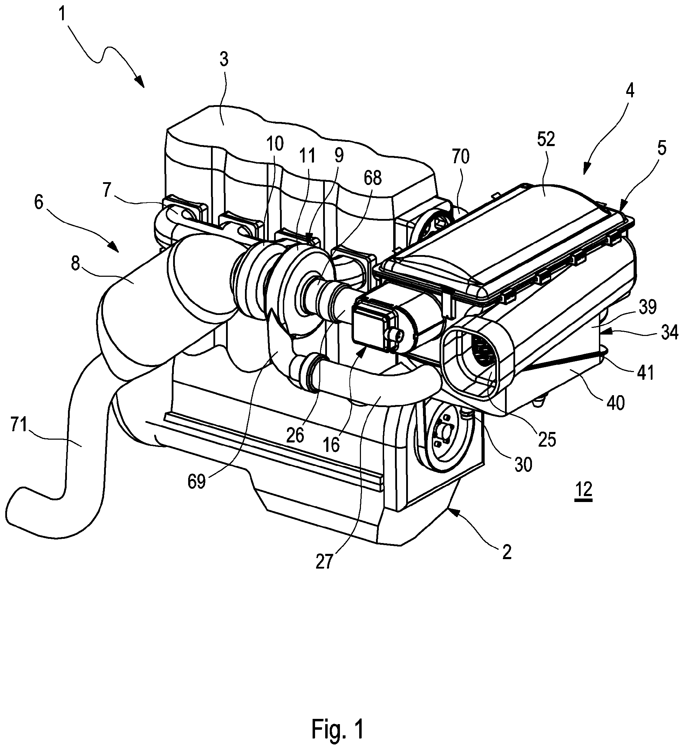

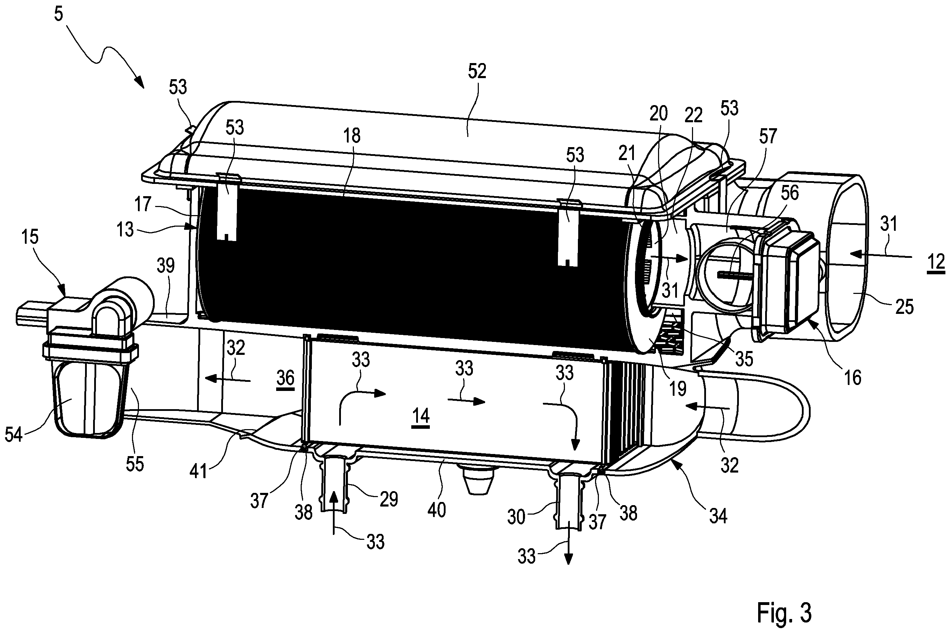

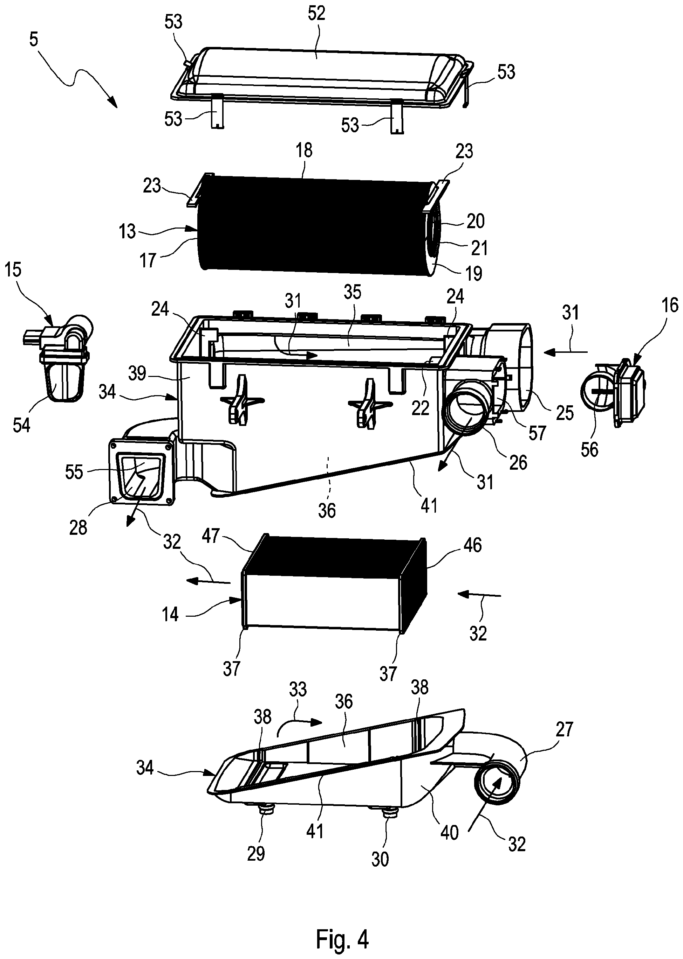

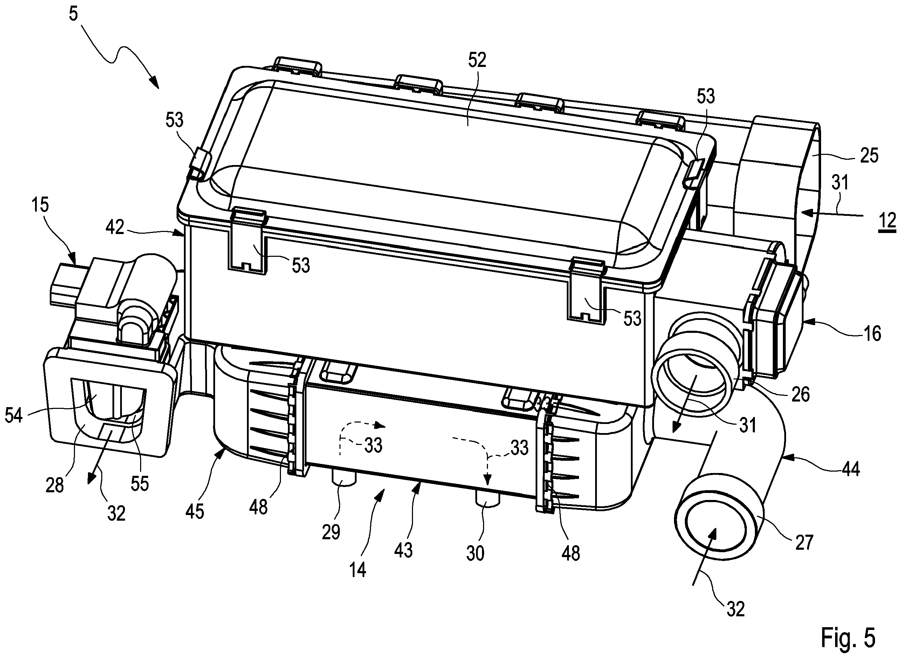

Weitere wichtige Merkmale und Vorteile der Erfindung ergeben sich aus den Unteransprüchen, aus den Zeichnungen und aus der zugehörigen Figurenbeschreibung anhand der Zeichnungen. Dabei zeigen die Figuren 1 bis 4 eine erfindungsgemäße Ausführungsform, während die Figuren 5 bis 9 eine nicht erfindungsgemäße Ausführungsform zeigen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine isometrische Ansicht einer Brennkraftmaschine mit einer Frischluftversorgungseinrichtung,
- Fig. 2: eine isometrische Ansicht der Frischluftversorgungseinrichtung, bei einer ersten grundsätzlichen Ausführungsform,
- Fig. 3: eine isometrische Schnittansicht der Frischluftversorgungseinrichtung gemäß Fig. 2,
- Fig. 4: eine isometrische auseinander gezogene Ansicht der Frischluftversorgungseinrichtung gemäß Fig. 2,
- Fig. 5: eine isometrische Ansicht der Frischluftversorgungseinrichtung bei einer zweiten grundsätzlichen Ausführungsform,
- Fig. 6: eine isometrische auseinander gezogene Ansicht der Frischluftversorgungseinrichtung gemäß Fig. 5,
- Fig. 7: eine isometrische Ansicht eines Ladeluftkühlers,
- Fig. 8: eine Detailansicht des Ladeluftkühlers entsprechend einer Blickrichtung VIII in Fig. 7,
- Fig. 9: eine Detailansicht des Ladeluftkühlers entsprechend einer Blickrichtung IX in Fig. 7.

Entsprechend Figur 1 umfasst eine Brennkraftmaschine 1, die beispielsweise in einem Kraftfahrzeug angeordnet sein kann, einen Motorblock 2, der in einem Zylinderkopf 3 mehrere verdeckte und nicht näher bezeichnete Brennräume enthält. Im Beispiel der Figur 1 ist ein Vier-Zylinder-Reihen-Motor dargestellt, der dementsprechend vier derartige Brennräume enthält. Zur Versorgung der Brennräume mit Frischluft ist die Brennkraftmaschine 1 mit einer Frischluftanlage 4 ausgestattet, die eine Frischluftversorgungseinrichtung 5 umfasst. Zum Abführen von Abgas von den Brennräumen ist die Brennkraftmaschine 1 mit einer Abgasanlage 6 ausgestattet, die zum Beispiel einen Abgassammler 7, der üblicherweise auch als Abgaskrümmer bezeichnet wird, sowie einen Katalysator 8 umfasst. Im Beispiel der Figur 1 handelt es sich um eine aufgeladene Brennkraftmaschine 1, wobei zur Aufladung ein Abgasturbolader 9 verwendet wird, der eine Turbine 10 und einen Verdichter 11 umfasst. Der Verdichter 11 ist in die Frischluftanlage 4 eingebunden, um das Druckniveau in der Frischluft zu erzeugen bzw. um aus atmosphärischer Frischluft, die aus einer Umgebung 12 angesaugt wird, Ladeluft zu erzeugen. Die Turbine 10 ist dagegen in der Abgasanlage 6 eingeordnet und treibt den Verdichter 11 an.

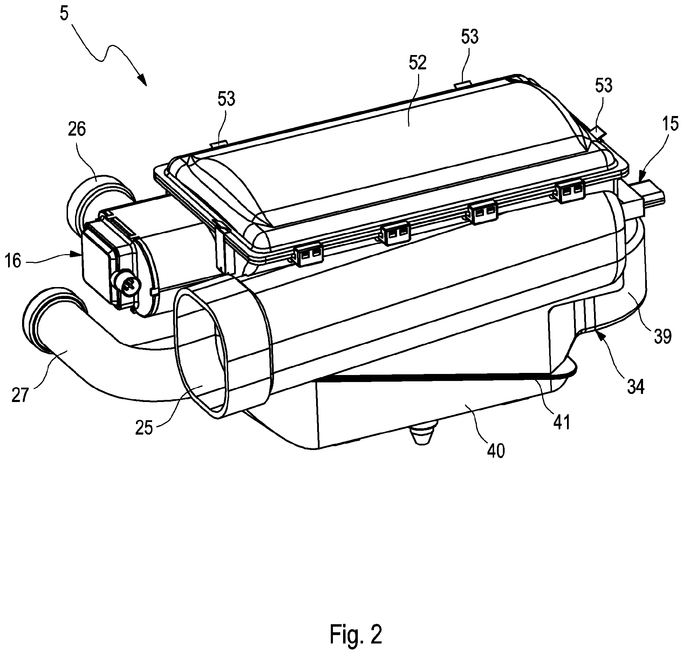

Nachfolgend wird mit Bezug auf die Figuren 2 bis 6 näher auf die Frischluftversorgungseinrichtung 5 eingegangen. Dementsprechend umfasst die Frischluftversorgungseinrichtung 5 ein Filterelement 13 und einen Ladeluftkühler 14. Bei den hier gezeigten, bevorzugten Ausführungsformen umfasst die Frischluftversorgungseinrichtung 5 außerdem eine Drosseleinrichtung 15 und einen Luftmassensensor 16.

Das Filterelement 13 ist hier rein exemplarisch als Ringfilterelement konzipiert und weist dementsprechend einen ringförmigen bzw. zylindrischen Filterkörper 18 auf, der vorzugsweise mit Hilfe eines bahnenförmigen, gefalteten Filtermaterials gebildet ist und der an seinen axialen Endseiten mit zwei Endscheiben 17 und 19 begrenzt ist. Im gezeigten Beispiel ist die eine Endscheibe 17 geschlossen, wodurch der Filterkörper 18 an dieser axialen Endseite oder Stirnseite axial verschlossen ist. Die andere Endscheibe 19 ist dagegen als offene Endscheibe ausgestaltet, die zentral eine Scheibenöffnung 20 enthält, durch die eine fluidische Verbindung mit dem vom Filterkörper 18 umschlossenen Innenraum möglich ist. An der offenen Endscheibe 19 ist außerdem eine Dichtung 21 integral ausgeformt, die im eingebauten Zustand des Filterelements 13 an einer Hülse 22 radial dichtend zur Anlage kommt. Des Weiteren ist an den Endscheiben 17, 19 jeweils ein Positionselement 23 angeordnet, das vorzugsweise integral an der jeweiligen Endscheibe 17, 19 ausgeformt sein kann. Das jeweilige Positionselement 23 kann im eingebauten Zustand mit einem dazu komplementären Positionsgeber 24 zusammenwirken, um eine vorbestimmte Relativlage für das Filterelement 13 bei der Montage zu finden und nach der Montage beizubehalten.

Die Frischluftversorgungseinrichtung 5 umfasst außerdem einen Frischlufteinlass 25 für Frischluft, der zur Umgebung 12 offen ist. Ferner sind ein Auslassstutzen 26 für gefilterte Frischluft und ein Einlassstutzen 27 für Ladeluft vorgesehen. Ferner ist ein Ladeluftauslass 28 für gekühlte Ladeluft vorhanden. Schließlich sind ein Kühlmitteleinlass 29 für ein flüssiges Kühlmittel sowie ein Kühlmittelauslass 30 für das Kühlmittel vorgesehen.

Ein durch Pfeile angedeuteter Frischluftpfad 31 verbindet den Frischlufteinlass 25 mit dem Auslassstutzen 26 und führt durch das Filterelement 13 hindurch. Ein durch Pfeile angedeuteter Ladeluftpfad 32 verbindet den Einlassstutzen 27 mit dem Ladeluftauslass 28 und führt durch den Ladeluftkühler 14 hindurch. Ein durch Pfeile angedeuteter Kühlmittelpfad 33 verbindet den Kühlmitteleinlass 29 mit dem Kühlmittelauslass 30 und ist durch den Ladeluftkühler 14 hindurchgeführt. Der Ladeluftkühler 14 ist in der Frischluftversorgungseinrichtung 5 so angeordnet, dass er den Kühlmittelpfad 33 mit dem Ladeluftpfad 32 wärmeübertragend koppelt.

Nachfolgend wird mit Bezug auf die Figuren 2 bis 4 auf eine erste grundlegende Ausführungsform der Frischluftversorgungseinrichtung 5 näher eingegangen. Bei dieser ersten grundlegenden Ausführungsform ist für das Filterelement 13 und den Ladeluftkühler 14 ein gemeinsames Gehäuse 34 vorgesehen. Es umfasst einen Filterraum 35 zur Aufnahme des Filterelements 13 und einen Kühlerraum 36 zur Aufnahme des Ladeluftkühlers 14. Filterraum 35 und Kühlerraum 36 sind im gemeinsamen Gehäuse 34 als separate Räume konfiguriert, die voneinander fluidisch getrennt, also nicht direkt miteinander verbunden sind. Der Kühlmitteleinlass 29 und der Kühlmittelauslass 30 sind am Gehäuse 34 ausgebildet und münden in den Kühlerraum 36 ein. Dementsprechend sind durch den Kühlerraum 36 sowohl der Ladeluftpfad 32 als auch der Kühlmittelpfad 33 hindurchgeführt. Der in den Kühlerraum 36 eingesetzte Ladeluftkühler 14 bewirkt im Kühlerraum 36 eine fluidische Trennung zwischen Ladeluftpfad 32 und Kühlmittelpfad 33 und bewirkt die gewünschte wärmeübertragende Kopplung zwischen Ladeluftpfad 32 und Kühlmittelpfad 33. Zu diesem Zweck ist der Ladeluftkühler 14 im Beispiel mit zwei Dichtungen 37 ausgestattet, die den Ladeluftkühler 14 jeweils in einer Umfangsrichtung geschlossen umlaufend einfassen. Die Dichtungen 37 bewirken im eingebauten Zustand des Ladeluftkühlers 14 eine Abdichtung zwischen Ladeluftpfad 32 und Kühlmittelpfad 33. Hierzu wirken die Dichtungen 37 mit dem Gehäuse 34 zusammen. Zweckmäßig sind hierzu am Gehäuse 34 Aufnahmenuten 38 vorgesehen, in welche die Dichtungen 37 radial eingreifen.

Die Aufnahmenuten 38 sind zweckmäßig integral am Gehäuse 34 ausgeformt. Die Dichtungen 37 sind zweckmäßig an den Ladeluftkühler 14 angespritzt oder angeschäumt. Die Dichtungen 37 und die zugehörigen Aufnahmenuten 38 bilden gleichzeitig eine Nut-Feder-Verbindung zur axialen Fixierung des Ladeluftkühlers 14 im Gehäuse 34.

Die Richtungsangaben "Umfangsrichtung" und "Radialrichtung" beziehen sich dabei auf eine Axialrichtung, die durch die Durchströmungsrichtung definiert ist, mit welcher der Ladeluftpfad 32 durch den Ladeluftkühler 14 hindurchströmt.

Ein wesentliches Merkmal dieser ersten grundlegenden Ausführungsform ist darin zu sehen, dass ein den Kühlmittelpfad 33 definierendes separates Kühlergehäuse nicht vorhanden ist, sondern durch einen Abschnitt des gemeinsamen Gehäuses 34 gebildet ist. Bei fehlendem Ladeluftkühler 14 sind im Gehäuse 34 der Ladeluftpfad 32 und der Kühlmittelpfad 33 nicht voneinander getrennt, sondern fluidisch miteinander verbunden.

Das gemeinsame Gehäuse 34 umfasst bei der hier vorgestellten bevorzugten Ausführungsform einen Basiskörper 39 und einen Abdeckkörper 40, der an den Basiskörper 39 angebaut ist. Vorzugsweise ist der Anbaukörper 40 an den Basiskörper 39 angeschweißt. Der Basiskörper 39 umfasst den Filterraum 35 und einen Teil des Kühlerraums 36. Im gezeigten Beispiel umfasst der Basiskörper 39 außerdem den Frischlufteinlass 25, den Auslassstutzen 26 und den Ladeluftauslass 28. Des Weiteren sind an den Basiskörper die Drosseleinrichtung 15 und der Luftmassensensor 16 angebaut. Im Unterschied dazu umfasst der Abdeckkörper 40 einen anderen Teil des Kühlerraums 36 und im Beispiel außerdem den Einlassstutzen 27. Sobald der Anbaukörper 40 an den Basiskörper 39 angebaut ist, wird der im Basiskörper 39 vorhandene Teil des Kühlerraums 36 durch den im Anbaukörper 40 vorhandenen Teil des Kühlerraums 36 zum vollständigen Kühlerraum 36 komplettiert. Im Beispiel verläuft eine Trennebene 41 zwischen den beiden Körpern 39, 40 des Gehäuses 34 geneigt oder schräg zur Längsachse des Ladeluftkühlers 14, wodurch beide Gehäusekörper 39, 40 keilförmig ausgestaltet sind.

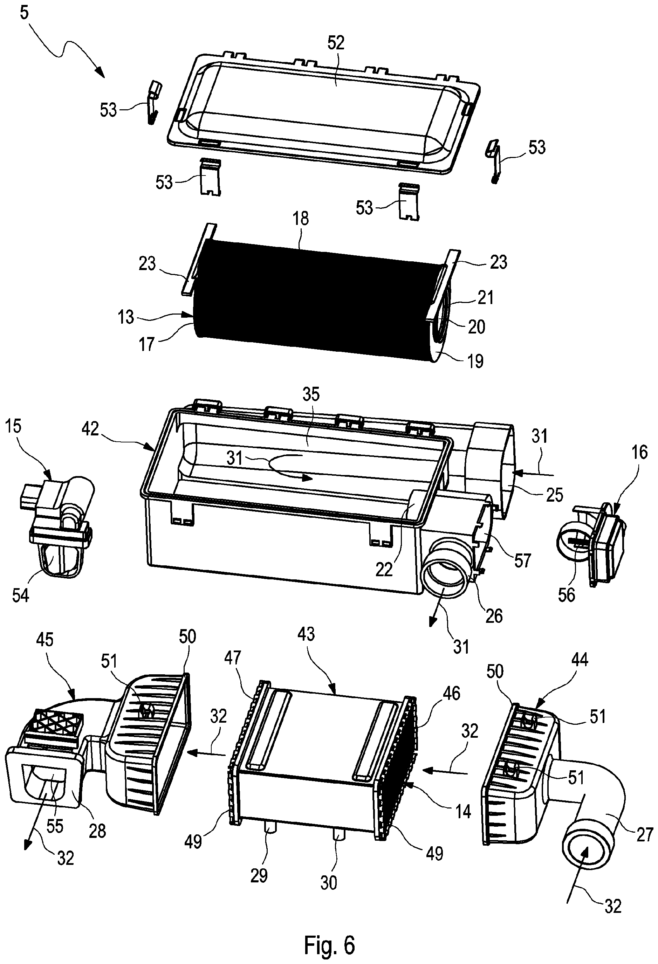

Nachfolgend wird anhand der Figuren 5 und 6 eine zweite grundlegende Ausführungsform der Frischluftversorgungseinrichtung 5 näher erläutert. Bei dieser zweiten grundlegenden Ausführungsform umfasst die Frischluftversorgungseinrichtung 5 mehrere Gehäuse, nämlich ein Filtergehäuse 42, ein Kühlergehäuse 43, ein Einlassgehäuse 44 und ein Auslassgehäuse 45. Das Filtergehäuse 42 enthält einen Filterraum 35 zur Aufnahme des Filterelements 13. Im Beispiel umfasst das Filtergehäuse 42 außerdem den Frischlufteinlass 25 und den Auslassstutzen 26. Ferner ist beim hier gezeigten Beispiel der Luftmassensensor 16 an das Filtergehäuse 42 angebaut.

Das Kühlergehäuse 43 umschließt den Ladeluftkühler 14 von einer Ladelufteinlassseite 46 bis zu einer Ladeluftauslassseite 47 und weist den Kühlmitteleinlass 29 und den Kühlmittelauslass 30 auf. Somit erstreckt sich das Kühlergehäuse 43 von der Ladelufteinlassseite 46 bis zur Ladeluftauslassseite 47 und umschließt den Ladeluftkühler 14 in der Umfangsrichtung geschlossen. Durch diese Bauweise ist im Ladeluftkühler 14 ein integrierter bzw. interner Kühlmittelpfad 33 realisiert. Insbesondere gehört das Kühlergehäuse 43 zum Bauumfang des Ladeluftkühlers 14, wodurch die Bereitstellung eines nach außen dichten Kühlmittelpfads 33 besonders einfach realisierbar ist.

Das Einlassgehäuse 44 ist an die Ladelufteinlassseite 46 angeschlossen und besitzt den Einlassstutzen 27. Das Auslassgehäuse 45 ist an die Ladeluftauslassseite 47 angeschlossen und weist den Ladeluftauslass 28 auf. Im Beispiel ist außerdem die Drosseleinrichtung 15 an das Auslassgehäuse 45 angebaut.

Zweckmäßig ist das Kühlergehäuse 43 aus einem Metall bzw. aus einer Metalllegierung hergestellt, während das Einlassgehäuse 44 und das Auslassgehäuse 45 aus Kunststoff hergestellt sind. Insbesondere kann auch das Filtergehäuse 42 aus einem Kunststoff hergestellt sein. Um das Einlassgehäuse 44 und das Auslassgehäuse 45 fluidisch dicht mit dem Kühlergehäuse 43 zu verbinden, sind gemäß einer bevorzugten Ausführungsform Crimpverbindungen 48 vorgesehen, durch welche eine hinreichend feste und dichte formschlüssige Verbindung zwischen den Gehäuseteilen 43, 44, 45 erreicht wird. Die hier gezeigten Crimpverbindungen 48 werden dadurch realisiert, dass am Kühlergehäuse 43 an der Ladelufteinlassseite 46 und an der Ladeluftauslassseite 47 jeweils ein axial abstehender, in der Umfangsrichtung im Wesentlichen geschlossen umlaufender Crimp-Kragen 49 ausgebildet ist, in den ein am Einlassgehäuse 44 bzw. am Auslassgehäuse 45 ausgebildeter, radial abstehender und geschlossen umlaufender Haltekragen 50 axial eingesetzt werden kann, und zwar soweit, dass ein zum Herstellen der Crimpverbindung 48 vorgesehener Endabschnitt des Crimp-Kragens 49 den jeweiligen Haltekragen 50 axial übergreift. Durch plastische Deformation des Crimp-Kragens 49 kann dieser radial nach innen verformt werden, bis er den jeweiligen Haltekragen 50 an einer vom Kühlergehäuse 43 abgewandten Seite hintergreift. Hierdurch wird eine formschlüssige Verbindung realisiert.

Das Einlassgehäuse 44 und das Auslassgehäuse 45 weisen Clipsverbinder 51 auf, mit denen sie mit dem Filtergehäuse 42 verclipsbar sind. Auf diese Weise kann die eine, das Filterelement 13 beinhaltende Baugruppe mit der anderen, den Ladeluftkühler 14 umfassenden Baugruppe verbunden werden.

Die nachfolgenden Ausführungen gelten sowohl für die in den Figuren 2 bis 4 gezeigte erste grundlegende Ausführungsform als auch für die in den Figuren 5 und 6 gezeigte zweite grundlegende Ausführungsform.

Zum Verschließen des Filterraums 35 ist ein Deckel 52 vorgesehen, der mit Hilfe von Halteklammern 53 am gemeinsamen Gehäuse 34 bzw. am Filtergehäuse 42 festgelegt ist. Die Drosseleinrichtung 15 umfasst ein Drosselglied 54, hier eine Schmetterlingsklappe, das im eingebauten Zustand in einem Drosselraum 55 angeordnet ist, der integral am gemeinsamen Gehäuse 34 bzw. am Einlassgehäuse 45 ausgeformt ist. Die Drosseleinrichtung 15 ist dabei so ausgestaltet, dass sie im montierten Zustand eine hier nicht näher bezeichnete Drosselraumöffnung, durch welche das Drosselorgan 54 in den Drosselraum 55 eingesetzt ist, dicht verschließt. Der Drosselraum 55 ist dabei im Ladeluftpfad 32 zwischen dem Ladeluftkühler 14 und dem Ladeluftauslass 28 angeordnet.

Der Luftmassensensor 16 umfasst eine Sensorik 56, die im eingebauten Zustand in einem Sensorraum 57 angeordnet ist. Dieser Sensorraum 57 ist dabei integral im Gehäuse 34 bzw. im Filtergehäuse 42 ausgeformt. Des Weiteren ist die Sensoreinrichtung 16 hier so ausgestaltet, dass sie im montierten Zustand eine hier nicht näher bezeichnete Sensorraumöffnung, durch welche die Sensorik 56 in den Sensorraum 57 eingesetzt ist, dicht verschließt. Der Sensorraum 57 ist dabei im Frischluftpfad 31 zwischen dem Filterelement 13 und dem Auslassstutzen 26 angeordnet.

Gemäß Figur 1 ergibt sich für den Einbauzustand der Frischluftversorgungseinrichtung 5 folgender Strömungspfad für die Frischluft zu den Brennräumen des Motorblocks 2. Von der Umgebung 12 gelangt die Frischluft durch den Frischlufteinlass 25 in den Frischluftpfad 31, der die Frischluft durch das Filterelement 13 und durch den Sensorraum 57 zum Auslassstutzen 26 führt. Der Auslassstutzen 26 ist an einen Einlass 68 des Verdichters 11 angeschlossen. Ein Auslass 69 des Verdichters 11 ist an den Einlassstutzen 27 angeschlossen, so dass die vom Verdichter 11 erzeugte Ladeluft durch den Einlassstutzen 27 in den Ladeluftpfad 32 gelangt, der die Ladeluft durch den Ladeluftkühler 14 und durch den Drosselraum 55 zum Ladeluftauslass 28 führt. An den Ladeluftauslass 28 ist ein Ladeluftverteiler 70 angeschlossen, der die Ladeluft auf die Brennräume der Brennkraftmaschine 1 verteilt. Das in den Brennräumen erzeugte Abgas wird im Abgassammler 7 zusammengeführt und der Turbine 10 zugeführt. Von der Turbine 10 gelangt das Abgas durch den Katalysator 8 in eine Abgasleitung 71, die das Abgas weiteren Abgasbehandlungseinrichtungen und/oder Schalldämpfungseinrichtungen zuführt.

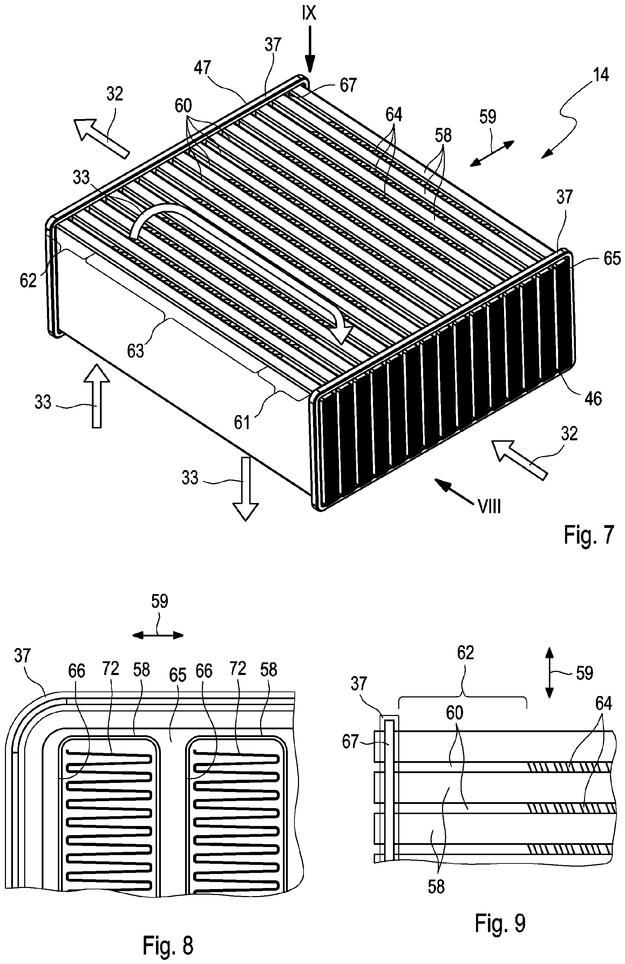

Entsprechend den Figuren 7 bis 8 umfasst der Ladeluftkühler 14 mehrere Rohre 58, die einenends an der Ladelufteinlassseite 46 und anderenends an der Ladeluftauslassseite 47 offen sind, so dass der Ladeluftpfad 32 durch diese Rohre 58 hindurchführt. Die Rohre 58 sind hier als Flachrohre mit Rechteckquerschnitt ausgestaltet. Die Rohre 58 sind in einer Stapelrichtung 59 aufeinander gestapelt und dabei derart relativ zueinander positioniert, dass sie in der Stapelrichtung 59 voneinander beabstandet sind. Hierdurch entsteht zwischen jeweils zwei benachbarten Rohren 58 jeweils ein Zwischenraum 60. Durch diese Zwischenräume 60 ist der Kühlmittelpfad 33 hindurchgeführt.

Die Zwischenräume 60 besitzen gemäß Figur 7 einen an die Ladelufteinlassseite 46 anschließenden ersten Endbereich 61, einen an die Ladeluftauslassseite 47 anschließenden zweiten Endbereich 62 und einen sich vom ersten Endbereich 61 bis zum zweiten Endbereichen 62 erstreckenden Mittelbereich 63. Die Bereiche 61, 62, 63 sind in Figur 7 durch geschweifte Klammern angedeutet. Bei der in Figur 7 gezeigten Ausführungsform sind in den Zwischenräumen 60 Wärmeübertragungsstrukturen 64 angeordnet, bei denen es sich üblicherweise um Lamellen oder um Turbulatoren handelt. Diese Wärmeübertragungsstrukturen 64 sind dabei ausschließlich im Mittelbereich 63 angeordnet. Hierdurch besitzt der Mittelbereich 63 einen signifikant größeren Durchströmungswiderstand als die beiden Endbereiche 61, 62, wodurch in den Zwischenräumen 60 eine bevorzugte Durchströmungsorientierung vorgegeben ist, um den gewünschten Kühlmittelpfad 33 zu realisieren.

Um den Kühlmittelpfad 33 vom Ladeluftpfad 32 trennen zu können, weist der Ladeluftkühler 14 zum Einen die bereits weiter oben beschriebenen Dichtungen 37 auf. Zum Anderen ist an der Ladelufteinlassseite 46 eine erste Endplatte 65 vorgesehen, die für jedes Rohr 58 eine separate Durchgangsöffnung 66 aufweist und die an der Ladelufteinlassseite 46 den Ladeluftpfad 32 vom Kühlmittelpfad 33 trennt. Analog dazu ist an der Ladeluftauslassseite 47 eine zweite Endplatte 67 vorgesehen, die ebenfalls für jedes Rohr 58 eine derartige separate Durchgangsöffnung 66 aufweist und die an der Ladeluftauslassseite 47 den Kühlmittelpfad 33 vom Ladeluftpfad 32 trennt. Die Dichtungen 37 sind gemäß den hier gezeigten bevorzugten Ausführungsformen an einen umlaufenden Außenrand der jeweiligen Endplatte 65, 67 angespritzt oder angeschäumt. Hierdurch besitzt die jeweilige Dichtung 37 für die Führungs- und Positionierungsfunktion, die sie in Verbindung mit der zugehörigen Aufnahmenut 38 bei der in den Figuren 2 bis 4 gezeigten Ausführungsform besitzen kann, eine erhöhte Stabilität.

Die in den Figuren 7 bis 9 gezeigte Ausführungsform des Ladeluftkühlers 14 kommt bevorzugt bei der in den Figuren 2 bis 4 gezeigten ersten grundsätzlichen Ausführungsform der Frischluftversorgungseinrichtung 5 zum Einsatz, kann jedoch grundsätzlich auch von einem Kühlergehäuse 43 gemäß der in den Figuren 5 und 6 gezeigten zweiten grundsätzlichen Ausführungsform umschlossen werden.

Gemäß Figur 8 können auch die Rohre 58 in ihrem Inneren mit Wärmeübertragungsstrukturen 72 ausgestattet sein, die beispielsweise als Lamellen oder als Turbulatoren ausgestaltet sein können.

Wie sich insbesondere den Fig. 2 und 5 entnehmen lässt, bildet die Frischluftversorgungseinrichtung 5 eine separat von der jeweiligen Brennkraftmaschine 1 vormontierbare Einheit, die im vormontierten Zustand an die jeweilige Brennkraftmaschine 1 anbaubar ist. Dabei kann die Frischluftversorgungseinrichtung 5 bereits den Verdichter 11 oder den gesamten Amgasturbolader 9 in dieser Einheit umfassen. Zum vereinfachten Anbauen des Verdichters 11 an die übrige Frischluftversorgungseinrichtung 5 bzw. zum vereinfachten Anbauen der Frischluftversorgungseinrichtung 5 an die bereits mit dem Verdichter 11 bzw. dem Abgasturbolader 9 ausgestattete Brennkraftmaschine 1 kann hier vorgesehen sein, dass eine Montagerichtung zum Verbinden des Auslassstutzens 26 mit dem Frischlufteintritt des Verdichters 11 parallel zu einer Montagerichtung zum Verbinden des Einlassstutzens 27 mit dem Ladeluftaustritt des Verdichters 11 verläuft. Im gezeigten Beispiel hat der Auslassstutzen 26 einen zylindrischen Endbereich mit einem Austrittsende, während der Einlassstutzen 27 einen zylindrischen Endbereich mit einem Eintrittsende besitzt. Ferner ist einerseits der Auslasstutzen 26 räumlich so ausgerichtet, dass eine Hauptströmungsrichtung der Frischluft im Bereich eines Austrittsendes des Auslassstutzens 26 parallel zur zugehörigen Montagerichtung verläuft, während andererseits der Einlassstutzen 27 räumlich so ausgerichtet ist, dass eine Hauptströmungsrichtung der Ladeluft im Bereich eines Eintrittsendes des Einlassstutzens 27 parallel zur zugehörigen Montagerichtung verläuft. Im Beispiel ist außerdem vorgesehen, dass das Austrittsende des Auslassstutzens 26 in einer Ebene liegt, die sich senkrecht zur jeweiligen Montagerichtung erstreckt, während das Eintrittsende des Einlassstutzens 27 in einer Ebene liegt, die sich senkrecht zur jeweiligen Montagerichtung erstreckt. Die beiden Ebenen können voneinander beabstandet sein oder zusammenfallen.

Gemäß Fig. 5 kann außerdem vorgesehen sein, dass der Ladeluftauslass 28 zum Verbinden mit einem Eintritt des Ladeluftverteilers 70 eine Montagerichtung besitzt, die parallel zu den Montagerichtungen der beiden Stutzen 26, 27 ist. Auch kann vorgesehen sein, dass im Bereich des Ladeluftauslasses 28 eine Hauptströmungsrichtung vorliegt, die parallel zu der zugerörigen Montagerichtung orientiert ist. Auch kann eine Auslassöffnung des Ladeluftauslasses 28 in einer Ebene liegen, die sich senkrecht zur zugehörigen Montagerichtung erstreckt. Auch diese Maßnahme vereinfacht den Anbau der vormontierten Einheit an der Brennkraftmaschine.

## Patentansprüche

1. Frischluftversorgungseinrichtung für eine Brennkraftmaschine (1), insbesondere eines Kraftfahrzeugs,
- mit einem Filterelement (13),
- mit einem Ladeluftkühler (14), der einen Kühlmittelpfad (33) mit einem Ladeluftpfad (32) wärmeübertragend koppelt,
- mit einem Frischlufteinlass (25) für Frischluft,
- mit einem Auslassstutzen (26) für gefilterte Frischluft zur fluidischen Kopplung mit einem Frischlufteintritt eines Verdichters (11) eines Abgasturboladers (9),
- mit einem Einlassstutzen (27) für Ladeluft zur fluidischen Kopplung mit einem Ladeluftaustritt des Verdichters (11),
- mit einem Ladeluftauslass (28) für gekühlte Ladeluft,
- mit einem Kühlmitteleinlass (29) für ein flüssiges Kühlmittel,
- mit einem Kühlmittelauslass (30) für das Kühlmittel,
- wobei ein Frischluftpfad (31) den Frischlufteinlass (25) mit dem Auslassstutzen (26) verbindet und durch das Filterelement (13) hindurchführt,
- wobei der Ladeluftpfad (32) den Einlassstutzen (27) mit dem Ladeluftauslass (28) verbindet und durch den Ladeluftkühler (14) hindurchführt,
- wobei der Kühlmittelpfad (33) den Kühlmitteleinlass (29) mit dem Kühlmittelauslass (30) verbindet und durch den Ladeluftkühler (14) hindurchführt,
**dadurch gekennzeichnet,**
**dass** für das Filterelement (13) und den Ladeluftkühler (14) ein gemeinsames Gehäuse (34) vorgesehen ist, das einen Filterraum (35) zur Aufnahme des Filterelements (13) und einen dazu separaten Kühlerraum (36) zur Aufnahme des Ladeluftkühlers (14) aufweist.

2. Einrichtung nach Anspruch 1,
**dadurch gekennzeichnet,**
**dass** der Kühlmitteleinlass (29) und der Kühlmittelauslass (30) am Gehäuse (34) ausgebildet sind und in den Kühlerraum (36) einmünden, durch den der Ladeluftpfad (32) und der Kühlmittelpfad (33) hindurchgeführt sind.

3. Einrichtung nach Anspruch 2,
**dadurch gekennzeichnet,**
**dass** der in den Kühlerraum (36) eingesetzte Ladeluftkühler (14) im Kühlerraum (36) den Ladeluftpfad (32) und den Kühlmittelpfad (33) fluidisch voneinander trennt und wärmeübertragend miteinander koppelt.

4. Einrichtung nach Anspruch 3,
**dadurch gekennzeichnet,**
**dass** der Ladeluftkühler (14) wenigstens eine Dichtung (37) aufweist, die den Ladeluftpfad (32) gegenüber dem Kühlmittelpfad (33) dichtet.

5. Einrichtung nach einem der Ansprüche 1 bis 4,
**dadurch gekennzeichnet,**
**dass** das Gehäuse (34) einen Basiskörper (39), der den Filterraum (35) und einen Teil des Kühlerraums (36) und insbesondere den Frischlufteinlass (25), den Auslassstutzen (26) sowie den Ladeluftauslass (28) aufweist, und einen Abdeckkörper (40) aufweist, der an den Basiskörper (39) angebaut ist und der einen Teil des Kühlerraums (36) und insbesondere den Einlassstutzen (27) aufweist.

6. Einrichtung nach einem der Ansprüche 1 bis 5,
**dadurch gekennzeichnet,**
**dass** der Ladeluftkühler (14) mehrere Rohre (58) aufweist, die einenends an einer Ladelufteinlassseite (46) des Ladeluftkühlers (14) offen sind und die anderenends an einer Ladeluftauslassseite (47) des Ladeluftkühlers (14) offen sind, wobei der Ladeluftpfad (32) durch diese Rohre (58) hindurchführt.

7. Einrichtung nach Anspruch 6,
**dadurch gekennzeichnet,**
- **dass** die Rohre (58) voneinander beabstandet sind, so dass zwischen benachbarten Rohren (58) jeweils ein Zwischenraum (60) ausgebildet ist, durch den der Kühlmittelpfad (33) hindurchführt,
- **dass** die Zwischenräume (60) in einem an die Ladelufteinlassseite (46) des Ladeluftkühlers (14) anschließenden ersten Endbereich (61) und in einem an die Ladeluftauslassseite (47) des Ladeluftkühlers (14) anschließenden zweiten Endbereich (62) einen kleineren Durchströmungswiderstand aufweisen als in einem zwischen den Endbereichen (61, 62) angeordneten Mittelbereich (63),
- **dass** nur im Mittelbereich (63) Wärmeübertragungsstrukturen (64) in den Zwischenräumen (60) angeordnet sind.

8. Einrichtung nach einem der Ansprüche 6 und 7,
**dadurch gekennzeichnet,**
- **dass** an der Ladelufteinlassseite (46) eine (erste) Endplatte (65) vorgesehen ist, die für jedes Rohr (58) eine separate Durchgangsöffnung (66) aufweist und die den Ladeluftpfad (32) vom Kühlmittelpfad (33) trennt, und/oder
- **dass** an der Ladeluftauslassseite (47) eine (zweite) Endplatte (67) vorgesehen ist, die für jedes Rohr (58) eine separate Durchgangsöffnung (66) aufweist und die den Kühlmittelpfad (33) vom Ladeluftpfad (32) trennt.

9. Einrichtung nach Anspruch 8,
**dadurch gekennzeichnet,**
**dass** an einem umlaufenden Außenrand der jeweiligen Endplatte (65, 67) eine umlaufende Dichtung (37) angeordnet ist, die in eine Aufnahmenut (38) eingreift, die in einem den Ladeluftkühler (14) aufnehmenden Gehäuse (34) ausgebildet ist.

10. Einrichtung nach einem der vorhergehenden Ansprüche,
**dadurch gekennzeichnet,**
**dass** die Frischluftversorgungseinrichtung (5) eine separat von der jeweiligen Brennkraftmaschine (1) vormontierbare Einheit ist, die im vormontierten Zustand an die jeweilige Brennkraftmaschine (1) anbaubar ist.

11. Einrichtung nach einem der vorhergehenden Ansprüche,
**dadurch gekennzeichnet,**
**dass** eine Montagerichtung zum Verbinden des Auslassstutzens (26) mit dem Frischlufteintritt des Verdichters (11) parallel zu einer Montagerichtung zum Verbinden des Einlassstutzens (27) mit dem Ladeluftaustritt des Verdichters (11) verläuft.

12. Einrichtung nach Anspruch 11,
**dadurch gekennzeichnet,**
- **dass** der Auslassstutzen (26) räumlich so ausgerichtet ist, dass eine Hauptströmungsrichtung der Frischluft im Bereich eines Austrittsendes des Auslassstutzens (26) parallel zur zugehörigen Montagerichtung verläuft,
- **dass** der Einlassstutzen (27) räumlich so ausgerichtet ist, dass eine Hauptströmungsrichtung der Ladeluft im Bereich eines Eintrittsendes des Einlassstutzens (27) parallel zur zugehörigen Montagerichtung verläuft.

13. Einrichtung nach Anspruch 12,
**dadurch gekennzeichnet,**
- **dass** das Austrittsende des Auslassstutzens (26) in einer Ebene liegt, die sich senkrecht zur jeweiligen Montagerichtung erstreckt,
- **dass** das Eintrittsende des Einlassstutzens (27) in einer Ebene liegt, die sich senkrecht zur jeweiligen Montagerichtung erstreckt.

14. Einrichtung nach einem der Ansprüche 1 bis 13,
**gekennzeichnet durch** einen Verdichter (11) eines Abgasturboladers (9), wobei der Verdichter (11) eintrittsseitig mit dem Auslassstutzen (26) und austrittsseitig mit dem Einlassstutzen (27) fluidisch verbunden ist.

15. Brennkraftmaschine, insbesondere für ein Kraftfahrzeug,
- mit einem Abgasturbolader (9), der einen Verdichter (11) und eine Turbine (10) aufweist, und
- mit einer Frischluftversorgungseinrichtung (5) nach einem der Ansprüche 1 bis 13,
- wobei der Verdichter (11) eintrittsseitig mit dem Auslassstutzen (26) und austrittseitig mit dem Einlassstutzen (27) fluidisch verbunden ist.

## Claims

1. A fresh air supply device for an internal combustion engine (1), in particular of a motor vehicle,
- having a filter element (13),
- having a charge air cooler (14), which couples a coolant path (33) to a charge air path (32) in a heat-transferring manner,
- having a fresh air inlet (25) for fresh air,
- having a discharge port (26) for filtered fresh air for fluid coupling to a fresh air entrance of a compressor (11) of an exhaust gas turbocharger (9),
- having an intake port (27) for charge air for fluid coupling to a charge air exit of the compressor (11),
- having a charge air outlet (28) for cooled charge air,
- having a coolant inlet (29) for a liquid coolant,
- having a coolant outlet (30) for the coolant,
- wherein a fresh air path (31) connects the fresh air inlet (25) to the discharge port (26) and leads through the filter element (13),
- wherein the charge air path (32) connects the intake port (27) to the charge air outlet (28) and leads through the charge air cooler (14),
- wherein the coolant path (33) connects the coolant inlet (29) to the coolant outlet (30) and leads through the charge air cooler (14),
**characterized in**
**that** a common housing (34) is provided for the filter element (13) and the charge air cooler (14), said housing having a filter chamber (35) for accommodating the filter element (13) and a separate cooler chamber (36) for accommodating the charge air cooler (14).

2. The device according to Claim 1,
**characterised in**
**that** the coolant inlet (29) and the coolant outlet (30) are formed on the housing (34) and open into the cooler chamber (36), through which the charge air path (32) and the coolant path (33) lead.

3. The device according to Claim 2,
**characterised in**
**that** the charge air cooler (14) inserted into the cooler chamber (36) separates the charge air path (32) and the coolant path (33) in the coolant chamber (36) from each other fluidically and couples them to each other in a heat-transferring manner.

4. The device according to Claim 3,
**characterised in**
**that** the charge air cooler (14) has at least one seal (37), which seals the charge air path (32) off from the coolant path (33).

5. The device according to any one of Claims 1 to 4,
**characterised in**
**that** the housing (34) has a base body (39), which has the filter chamber (35) and part of the cooler chamber (36) and in particular the fresh air inlet (25), the discharge port (26) and the charge air outlet (28), and a covering body (40), which is attached to the base body (39) and has part of the cooler chamber (36) and in particular the intake port (27).

6. The device according to any one of Claims 1 to 5,
**characterised in**
**that** the charge air cooler (14) has a plurality of tubes (58), which are open on a charge air inlet side (46) of the charge air cooler (14) at one end and are open on a charge air outlet side (47) of the charge air cooler (14) at the other end, wherein the charge air path (32) leads through said tubes (58).

7. The device according to Claim 6,
**characterised in**
- **that** the tubes (58) are spaced apart from each other such that an interspace (60) is formed in each case between adjacent tubes (58), through which interspace the coolant path (33) leads,
- **that** the interspaces (60) have a lower flow resistance in a first end region (61) that adjoins the charge air inlet side (46) of the charge air cooler (14) and in a second end region (62) that adjoins the charge air outlet side (47) of the charge air cooler (14) than in a centre region (63) arranged between the end regions (61, 62),
- **that** heat transfer structures (64) are arranged in the interspaces (60) only in the centre region (63).

8. The device according to any one of claims 6 and 7,
**characterised in**
- **that** a (first) end plate (65) is provided on the charge air inlet side (46), said end plate having a separate through-opening (66) for each tube (58) and separating the charge air path (32) from the coolant path (33), and/or
- **that** a (second) end plate (67) is provided on the charge air outlet side (47), said end plate having a separate through-opening (66) for each tube (58) and separating the coolant path (33) from the charge air path (32).

9. The device according to Claim 8,
**characterised in**
**that** a circumferential seal (37) is arranged on a circumferential outer edge of the respective end plate (65, 67), said seal engaging in a receiving groove (38), which is formed in a housing (34) that accommodates the charge air cooler (14).

10. The device according to any one of the preceding Claims,
**characterised in**
**that** the fresh air supply device (5) is a pre-assemblable unit, which is separate from the respective internal combustion engine (1) and can be attached to the respective internal combustion engine (1) when in the pre-assembled state.

11. The device according to any one of the preceding Claims,
**characterised in**
**that** an assembly direction for connecting the discharge port (26) to the fresh air entrance of the compressor (11) runs parallel to an assembly direction for connecting the intake port (27) to the charge air exit of the compressor (11).

12. The device according to Claim 11,
**characterised in**
- **that** the discharge port (26) is spatially oriented in such a manner that a main flow direction of the fresh air runs parallel to the associated assembly direction in the region of an exit end of the discharge port (26),
- **that** the intake port (27) is spatially oriented in such a manner that a main flow direction of the charge air runs parallel to the associated assembly direction in the region of an entrance end of the intake port (27).

13. The device according to Claim 12,
**characterised in**
- **that** the exit end of the discharge port (26) lies in a plane that extends perpendicularly to the respective assembly direction,
- **that** the entrance end of the intake port (27) lies in a plane that extends perpendicularly to the respective assembly direction.

14. The device according to any one of Claims 1 to 13,
**characterised**
**by** a compressor (11) of an exhaust gas turbocharger (9), wherein the compressor (11) is fluid-connected on the entrance side to the discharge port (26) and on the exit side to the intake port (27).

15. An internal combustion engine, in particular for a motor vehicle,
- with an exhaust gas turbocharger (9) having a compressor (11) and a turbine (10), and
- with a fresh air supply device (5) according to any one of Claims 1 to 13,
- wherein the compressor (11) is fluid-connected on the entrance side to the discharge port (26) and on the exit side to the intake port (27).

## Revendications

1. Dispositif d'alimentation d'air frais pour un moteur à combustion interne (1), en particulier d'un véhicule automobile,
- avec un élément filtrant (13),
- avec un refroidisseur d'air de suralimentation (14) qui couple par transmission de chaleur une voie de fluide de refroidissement (33) à une voie d'air de suralimentation (32),
- avec une entrée d'air frais (25) pour l'air frais,
- avec une tubulure de sortie (26) pour l'air frais filtré pour le couplage fluidique avec une entrée d'air frais d'un compresseur (11) d'un turbocompresseur à gaz d'échappement (9),
- avec une tubulure d'entrée (27) pour l'air de suralimentation pour le couplage fluidique avec une sortie d'air de suralimentation du compresseur (11),
- avec une sortie d'air de suralimentation (28) pour l'air de suralimentation refroidi,
- avec une entrée de fluide de refroidissement (29) pour un fluide de refroidissement liquide,
- avec une sortie de fluide de refroidissement (30) pour le fluide de refroidissement,
- dans lequel une voie d'air frais (31) relie l'entrée d'air frais (25) à la tubulure de sortie (26) et passe à travers l'élément filtrant (13),
- dans lequel la voie d'air de suralimentation (32) relie la tubulure d'entrée (27) à la sortie d'air de suralimentation (28) et passe à travers le refroidisseur d'air de suralimentation (14),
- dans lequel la voie de fluide de refroidissement (33) relie l'entrée de fluide de refroidissement (29) à la sortie de fluide de refroidissement (30) et passe à travers le refroidisseur d'air de suralimentation (14),
**caractérisé en ce**
**que** pour l'élément filtrant (13) et le refroidisseur d'air de suralimentation (14), un boîtier (34) commun est prévu, lequel présente un espace filtrant (35) pour la réception de l'élément filtrant (13) et un espace de refroidisseur (36) séparé de celui-ci pour la réception du refroidisseur d'air de suralimentation (14).

2. Dispositif selon la revendication 1,
**caractérisé en ce**
**que** l'entrée de fluide de refroidissement (29) et la sortie de fluide de refroidissement (30) sont réalisées au niveau du boîtier (34) et débouchent dans l'espace de refroidisseur (36), par lequel la voie d'air de suralimentation (32) et la voie de fluide de refroidissement (33) sont passées à travers.

3. Dispositif selon la revendication 2,
**caractérisé en ce**
**que** le refroidisseur d'air de suralimentation (14) inséré dans l'espace de refroidisseur (36) sépare, dans l'espace de refroidisseur (36), la voie d'air de suralimentation (32) et la voie de fluide de refroidissement (33) fluidiquement l'une de l'autre et les couple par transmission de chaleur.

4. Dispositif selon la revendication 3,
**caractérisé en ce**
**que** le refroidisseur d'air de suralimentation (14) présente au moins une garniture (37) qui rend étanche la voie d'air de suralimentation (32) par rapport à la voie de fluide de refroidissement (33).

5. Dispositif selon l'une quelconque des revendications 1 à 4,
**caractérisé en ce**
**que** le boîtier (34) présente un corps de base (39) qui présente l'espace filtrant (35) et une partie de l'espace de refroidisseur (36) et en particulier l'entrée d'air frais (25), la tubulure de sortie (26) ainsi que la sortie d'air de suralimentation (28), et un corps de recouvrement (40) qui est monté sur le corps de base (39) et qui présente une partie de l'espace de refroidisseur (36) et en particulier la tubulure d'entrée (27).

6. Dispositif selon l'une quelconque des revendications 1 à 5,
**caractérisé en ce**
**que** le refroidisseur d'air de suralimentation (14) présente plusieurs tubes (58) qui sont ouverts sur une extrémité au niveau d'un côté d'entrée d'air de suralimentation (46) du refroidisseur d'air de suralimentation (14) et qui sont ouverts sur une autre extrémité au niveau d'un côté de sortie d'air de suralimentation (47) du refroidisseur d'air de suralimentation (14), dans lequel la voie d'air de suralimentation (32) passe à travers ces tubes (58).

7. Dispositif selon la revendication 6,
**caractérisé en ce**
- **que** les tubes (58) sont espacés les uns des autres de sorte qu'entre des tubes (58) contigus, respectivement un espace intermédiaire (60) soit réalisé, par lequel la voie de fluide de refroidissement (33) passe à travers,
- **que** les espaces intermédiaires (60) présentent dans une première zone d'extrémité (61) contiguë au côté d'entrée d'air de suralimentation (46) du refroidisseur d'air de suralimentation (14) et dans une seconde zone d'extrémité (62) contiguë au côté de sortie d'air de suralimentation (47) du refroidisseur d'air de suralimentation (14) une plus petite résistance à l'écoulement que dans une zone médiane (63) agencée entre les zones d'extrémité (61, 62),
- **que** seulement dans la zone médiane (63), des structures de transmission de chaleur (64) sont agencées dans les espaces intermédiaires (60).

8. Dispositif selon l'une quelconque des revendications 6 et 7,
**caractérisé en ce**
- **qu'**au niveau du côté d'entrée d'air de suralimentation (46), une (première) plaque d'extrémité (65) est prévue, laquelle présente pour chaque tube (58) une ouverture de passage séparée (66) et laquelle sépare la voie d'air de suralimentation (32) de la voie de fluide de refroidissement (33) et/ou
- **qu'**au niveau du côté de sortie d'air de suralimentation (47), une (seconde) plaque d'extrémité (67) est prévue, laquelle présente pour chaque tube (58) une ouverture de passage séparée (66) et laquelle sépare la voie de fluide de refroidissement (33) de la voie d'air de suralimentation (32).

9. Dispositif selon la revendication 8,
**caractérisé en ce**
**qu'**une garniture (37) périphérique est agencée au niveau d'un bord extérieur périphérique de la plaque d'extrémité (65, 67) respective, laquelle vient en prise dans une rainure de réception (38) qui est réalisée dans un boîtier (34) recevant le refroidisseur d'air de suralimentation (14).

10. Dispositif selon l'une quelconque des revendications précédentes,
**caractérisé en ce**
**que** le dispositif d'alimentation d'air frais (5) est une unité prémontable séparément du moteur à combustion interne (1) respectif qui peut être montée dans l'état prémonté sur le moteur à combustion interne (1) respectif.

11. Dispositif selon l'une quelconque des revendications précédentes,
**caractérisé en ce**
**qu'**un sens de montage pour la liaison de la tubulure de sortie (26) avec l'entrée d'air frais du compresseur (11) s'étend parallèlement à un sens de montage pour la liaison de la tubulure d'entrée (27) à la sortie d'air de suralimentation du compresseur (11).

12. Dispositif selon la revendication 11,
**caractérisé en ce**
- **que** la tubulure de sortie (26) est orientée spatialement de sorte qu'un sens d'écoulement principal d'air frais s'étende dans la zone d'une extrémité de sortie de la tubulure de sortie (26) parallèlement au sens de montage afférent,
- **que** la tubulure d'entrée (27) est orientée spatialement de sorte qu'un sens d'écoulement principal de l'air de chargement s'étende dans la zone d'une extrémité d'entrée de la tubulure d'entrée (27) parallèlement au sens de montage afférent.

13. Dispositif selon la revendication 12,
**caractérisé en ce**
- **que** l'extrémité de sortie de la tubulure de sortie (26) se trouve dans un plan qui s'étend perpendiculairement au sens de montage respectif,
- **que** l'extrémité d'entrée de la tubulure d'entrée (27) se trouve dans un plan qui s'étend perpendiculairement au sens de montage respectif.

14. Dispositif selon l'une quelconque des revendications 1 à 13,
**caractérisé par** un compresseur (11) d'un turbocompresseur à gaz d'échappement (9), dans lequel le compresseur (11) est relié fluidiquement côté entrée à la tubulure de sortie (26) et côté sortie à la tubulure d'entrée (27).

15. Moteur à combustion interne, en particulier pour un véhicule automobile,
- avec un turbocompresseur à gaz d'échappement (9) qui présente un compresseur (11) et une turbine (10), et
- avec un dispositif d'alimentation d'air frais (5) selon l'une quelconque des revendications 1 à 13,
- dans lequel le compresseur (11) est relié fluidiquement côté entrée à la tubulure de sortie (26) et côté sortie à la tubulure d'entrée (27).
